# FASCICULE DE BREVET EUROPEEN

(11) **EP 1 897 211 B1**
(45) Date de publication et mention de la délivrance du brevet: **02.12.2020**
(21) Numéro de dépôt: 06778600.4
(22) Date de dépôt: 15.06.2006
(51) Int. Cl.: H02K 29/08, H02K 11/01, H02K 11/215

(54) **SERVO-ACTIONNEUR ELECTROMAGNETIQUE MONOPHASE ROTATIF COMPRENANT UN ACTIONNEUR ET UN CAPTEUR DE POSITION**
DREHENDER EINPHASIGER ELEKTROMAGNETISCHER SERVOBETÄTIGER MIT EINER BETÄTIGUNGSEINRICHTUNG UND POSITIONSGEBER
ROTARY SINGLE-PHASE ELECTROMAGNETIC SERVO ACTUATOR COMPRISING AN ACTUATOR AND A POSITION SENSOR

(30) Priorité: 15.06.2005 FR 0506065
(43) Date de publication de la demande: 12.03.2008
(73) Titulaire: Sonceboz S.A., 2605 Sonceboz (CH)
(72) Inventeur: LOUSSERT, Guillaume, F-25000 Besancon (FR); GANDEL, Pierre, F-25660 Montfaucon (FR)
(74) Mandataire: IP Trust
(86) Numéro de dépôt international: PCT/FR2006/001359
(87) Numéro de publication internationale: WO 2007/012711

(56) Documents cités:
- EP-A- 1 372 241
- EP-A- 1 477 772
- WO-A-03/069765
- US-A- 4 518 886
- US-A- 5 874 796
- US-A- 5 895 992
- US-A1- 2002 008 513

## Description

La présente invention concerne un serve-actionneur électromagnétique comprenant un actionneur monophasé rotatif produisant un couple constant sur une course angulaire limitée comportant un rotor formé d'une culasse en matériau ferromagnétique et de 2N paires de pôles aimantés en sens alternés, et une structure statorique comportant respectivement 2N pôles ferromagnétiques et au moins une bobine, et un capteur de position du rotor.

Cette association d'un actionneur avec un capteur est destinée à déplacer en rotation, et de façon non limitative, une vanne de conduit d'admission d'air pour moteur à combustion interne.

On cannait déjà dans l'art antérieur, l'association d'un actionneur et d'un capteur électromagnétique pour l'actionnement d'une vanne et spécialement pour l'automobile. Les solutions employées conduisent généralement à des solutions présentant des inconvénients divers : encombrement spatial important du fait de l'encombrement intrinsèque des deux éléments actionneur et capteur, perturbation du signal du capteur lors du fonctionnement de l'actionneur, difficile indexation entre capteur et position de la vanne.

Un des objets de la présente invention est de remédier à ces inconvénients en proposant une solution innovante pour l'homme de métier.

À cet effet, la présente demande de brevet décrit un servo-actionneur électromagnétique comprenant un ensemble actionneur + capteur innovant caractérisé en ce que le capteur est intégré de façon simple sur la culasse de l'actionneur, sans qu'il y ait influence du champ magnétique crée par l'actionneur sur le capteur.

Le document EP1372241 décrit un actionneur monophasé associé à un capteur de position. L'actionneur comporte une structure statorique et un rotor. La structure statorique possède 4 pôles avec plusieurs bobines d'excitation et est réalisée en un matériau de haute perméabilité magnétique. Le rotor présente une culasse ferromagnétique et une partie mince aimantée constituée de 2N paires de pôles aimantés axialement, en un sens alterné.

Les documents WO 03/069765, US 2002/008513, EP 1477772, US 4518886, US 5874796 et US5895992 décrivent des servo-actionneurs avec des structures similaires. Cependant, aucun document décrit un actionneur monophasé associé à un capteur de position, qui comprend un émetteur de champ magnétique étant fixé solidairement sur la culasse et qui comprend un récepteur de champ magnétique étant situé dans le plan médian de symétrie d'au moins un des pôles.

Les défauts sur le capteur de position conduisent à de nombreux problèmes. Un des objets de la présente invention est de remédier à ces inconvénients en proposant une solution innovante pour l'homme de métier.

A cet effet, la présente demande de brevet décrit un servo-actionneur électromagnétique comprenant un actionneur et un capteur. Notamment, le capteur est intégré de façon simple sur la culasse de l'actionneur, sans qu'il y ait influence du champ magnétique crée par l'actionneur sur le capteur.

A cet effet, la présente demande de brevet décrit un servo-actionneur électromagnétique monophasé composé d'un actionneur rotatif destiné à déplacer un organe mobile sur une course limitée, comportant une structure statorique à 2N pôles, N étant égal à 1 ou 2, et au moins une bobine d'excitation, ladite structure statorique étant réalisée en un matériau de haute perméabilité magnétique, et un rotor présentant une culasse ferromagnétique et une partie mince aimantée constituée de 2N paires de pôles aimantés axialement, en sens alterné et d'un capteur de position angulaire du rotor.

Le capteur de position présente un émetteur de champ magnétique étant fixé solidaire sur la culasse et un récepteur dudit champ magnétique étant fixé par rapport à la structure statorique. Le récepteur fixé est à proximité dudit émetteur et est situé dans le plan médian de symétrie d'au moins un des pôles, qui est une zone libre de toute induction magnétique.

Dans un mode de réalisation, l'émetteur de champ magnétique est un aimant annulaire. Le récepteur de champ magnétique est une sonde magnétosensible à effet Hall. La sonde magnétosensible est placée entre deux circuits magnétiques de collecte formés par deux arcs ferromagnétiques entourant partiellement l'aimant annulaire. Le récepteur de champ magnétique est une sonde du type mesurant deux composantes planes et placée sur l'axe formé par l'intersection des plans médians de symétrie des pôles.

Dans un autre mode de réalisation, l'émetteur de champ magnétique est un aimant cylindrique aimanté diamétralement et le récepteur du champ magnétique est constitué de deux éléments magnétosensibles mesurant les composantes tangentielles et radiales ou tangentielles et axiales du champ magnétique émis. Le servo-actionneur électromagnétique comprend un circuit de traitement apte à effectuer une combinaison des deux composantes afin de déterminer l'angle de rotation du rotor.

Dans encore un autre mode de réalisation, l'émetteur de champ magnétique est une pièce ferromagnétique en forme de U, ayant un champ coercitif inférieur à 500 Oersteds.

Dans encore un autre mode de réalisation, l'émetteur de champ magnétique est une pièce de tenue mécanique en forme de U, dans laquelle est installé un aimant.

Dans encore un autre mode de réalisation, l'émetteur de champ magnétique est un aimant à polarisation diamétrale.

De manière avantageuse, le servo-actionneur électromagnétique monophasé comprend un couvercle et un boîtier liés par clipsage à l'aide d'au moins une patte ajourée prolongeant le couvercle et coopérant avec une griffe protubérante du boîtier. Le boîtier présente une gorge sur la zone frontale pour recevoir un joint, par exemple un adhésif assurant la liaison avec la face intérieure du couvercle. Le couvercle comprend un connecteur pour le raccordement électrique extérieur du servo-actionneur, ledit connecteur présentant à l'intérieur du couvercle des moyens d'interconnections électriques avec la ou les bobines de l'ensemble statorique du boîtier. Les moyens d'interconnections électriques sont constitués par une lame fendue. Les têtes de pôles de la structure statorique sont évasées. Les pôles statoriques sont chassés mécaniquement dans une base présentant des lumières dont la section correspond sensiblement à la section du pied du pôle.

Dans un mode de réalisation, la structure statorique est au moins en partie surmoulée dans un matériau thermoplastique, le surmoulage formant la butée interne pour un roulement, une bague de guidage d'un axe solidaire du rotor, au moins une griffe sur son extérieur, un palier de guidage de l'axe ainsi qu'une gorge d'étanchéité. La face de l'actionneur opposée au couvercle n'est pas surmoulée pour laisser apparaître la base de fixation des pôles qui présente les moyens de liaison tels que goujons, filetage, de préférence non débouchant pour la fixation sur un support externe.

Dans un mode de réalisation particulier, le servo-actionneur électromagnétique monophasé comprend une butée formée de deux flasques en acier et une cage de roulement en plastique contenant les billes. De plus, il intègre un dispositif de verrouillage et de déverrouillage (44) de l'arbre de sortie, commandé par le rotor de l'actionneur.

Dans un autre mode de réalisation particulier, le capteur de position est un capteur digital détectant la ou les positions extrêmes de déplacement de l'organe mobile.

De manière avantageuse, la culasse de l'actionneur considérée est réalisée dans un matériau ferromagnétique à haute perméabilité magnétique, ce qui crée un blindage magnétique et interdit toute influence du moteur sur le signal capteur. De plus et préférentiellement, la sonde magnétosensible, récepteur du champ magnétique, est placée dans au moins un plan neutre par rapport aux pôles statoriques de l'actionneur où l'influence du champ magnétique moteur est nulle.

Dans un mode de réalisation préférentiel, le capteur utilisé est de type décrit dans le brevet FR2670286**.** Ce type de capteur permet de travailler autour d'un signal 0 Gauss insensible aux variations de température. Il comprend un émetteur de champ magnétique sous forme d'un aimant annulaire placé entre deux circuits de collecte formés par deux arcs ferromagnétiques entourant partiellement l'aimant annulaire. Le réglage de cette position 0 Gauss nécessite une indexation de l'aimant capteur par rapport au stator capteur. Il est cependant possible d'utiliser d'autres types de capteurs et c'est un des objets de la présente demande que de permettre l'utilisation, suivant différents modes de réalisation, de différents types de capteurs à sondes magnéto sensibles ou inductifs.

C'est aussi un des objets de l'invention que de permettre l'utilisation d'un capteur de type digital, ne servant qu'à détecter que le début et/ou la fin de la course.

On connait dans l'état de l'art actuel des actionneurs électromagnétiques capables de réaliser le mouvement d'une vanne avec un couple constant proportionnel. La publication FR2670629 présente, à cet effet, un actionneur à 2N paires de pôles aimantés au rotor produisant un couple proportionnel au courant d'alimentation et permettant un auto-centrage du rotor grâce à la combinaison d'une butée axiale et de la force électromagnétique axiale des aimants sur la partie statorique.

La réalisation de cet actionneur ne permet cependant pas une utilisation optimale et une réalisation industrielle. De plus, l'encombrement spatial important pris par l'association d'un tel actionneur avec un capteur de position angulaire, (association souvent indispensable dans les applications automobiles pour des raisons de sécurité), est rédhibitoire pour une utilisation réaliste de l'ensemble.

Un autre des objets de la présente invention est donc de proposer un actionneur à structure innovante permettantd'obtenir un fort couple constant et proportionnel au courant de commande, de limiter le nombre de pièces, tout en améliorant le comportement thermique de l'actionneur lors de son fonctionnement et de rendre le servo-actionneur industrialisable.

De manière préférentielle, les pôles statoriques sont réalisés par un procédé dit de « frappe à froid » dans un matériau coulé, ce qui garantit une haute qualité ferromagnétique. Les pôles statoriques ainsi réalisés sont ensuite chassés mécaniquement dans une plaque de base en matériau ferromagnétique, ce qui assure un joint magnétique optimal et limite l'apparition d'un couple de détente lors du déplacement du rotor, comprenant culasse + pôles aimantés du moteur, au-dessus des pôles statoriques. L'agencement des pôles magnétiques sur la base définit l'assise pour un support de butée, destiné à recevoir une ) butée sur laquelle vient s'appuyer le rotor, grâce à un épaulement réalisé sur chacun des 4 pôles lors de l'obtention de ceux-ci par le procédé de frappe à froid.

Selon un mode de réalisation avantageux, l'ensemble statorique ainsi formé peut alors être surmoulé par un polymère thermoplastique type LCP (Liquid Crystal Polymer). L'utilisation de ce procédé permet de réaliser le palier de guidage et le support de butée du rotor en une seule opération et de façon simple et économique, tout en garantissant une amélioration de la tenue en température par l'évacuation plus aisée de la puissance électrique dissipée par effet Joule par les bobines d'alimentation électrique.

Un autre des objets de la présente invention est de proposer un servo-actionneur avec un système de verrouillage et de déverrouillage capable de bloquer toute action mécanique extérieure s'appliquant sur l'axe de sortie piloté par l'actionneur, sans toutefois empêcher le déplacement commandé par l'actionneur de l'organe à déplacer dans les deux sens de rotation de cet organe. Cette association servo-actionneur + système de verrouillage et de déverrouillage permet de réaliser un actionneur sous-dimensionné pour une application donnée puisqu'il n'a alors plus à vaincre les forces de réaction extérieures s'exerçant sur l'axe de rotation commandé. Ceci permet un gain de place et de coût décisif pour bon nombre d'applications et permet l'utilisation de cet actionneur dans de multiples applications auxquelles il ne pourrait pas répondre sans cette association.

Selon un mode de réalisation, le serve-actionneur comprend un circuit de traitement apte à effectuer une combinaison des deux composantes afin de déterminer l'angle de rotation du rotor.

Selon un autre mode de réalisation, le récepteur de champ magnétique est une sonde de type mesurant deux composantes planes et placée sur l'axe formé par l'intersection des plans médians longitudinaux de symétrie des pôles, et l'émetteur de champ magnétique est un aimant à polarisation diamétrale.

Selon encore un autre mode de réalisation, le capteur de position est un capteur digital détectant la ou les positions extrêmes de déplacement de l'organe mobile.

La compréhension de la description sera facilitée en se référant aux dessins ci-joints dans lesquels :
- la figure 1 représente une vue de trois-quarts du servo-actionneur décrit par la présente invention dans son mode de réalisation préférentiel ;
- les figures 2A et 2B représentent des vues isolées du serve-actionneur, suivant un premier mode de réalisation du capteur, sans l'ensemble de surmoulage ;
- la figure 3 représente une vue isolée du serve-actionneur, suivant un second mode de réalisation du capteur, sans l'ensemble du surmoulage
- la figure 4 représente une vue isolée du servo-actionneur, suivant un troisième mode de réalisation du capteur, sans l'ensemble du surmoulage ;
- la figure 5 représente une vue isolée du serve-actionneur, suivant un quatrième mode de réalisation du capteur, sans l'ensemble du surmoulage ;
- la figure 6 représente une vue isolée du couvercle du serve-actionneur destiné à être fixé sur l'ensemble statorique surmoulé ;
- la figure 7 représente l'ensemble statorique avec son surmoulage en LCP ;
- la figure 8 représente l'ensemble statorique sans son surmoulage en LCP
la figure 9 représente une vue éclatée de l'ensemble statorique avec son surmoulage en LCP, le rotor et sa butée axiale ;
la figure 10 représente une vue de l'ensemble statorique surmoulé couché ;
- la figure 11 représente une vue isolée d'une butée à billes, dans un mode de réalisation préférentiel, pouvant être utilisée pour assurer le positionnement et la libre rotation du rotor de l'actionneur sur la partie statorique ;
- la figure 12 représente une vue éclatée du serve-actionneur sans surmoulage suivant un deuxième mode de réalisation de l'actionneur ;
- la figure 13 représente une vue éclatée du serve-actionneur de la figure 1, associé à un système de verrouillage et déverrouillage mécanique ;
la figure 14 présente une variante du serve-actionneur de la figure 12 pour lequel le rotor a un axe traversant ;
la figure 15 présente une variante du servo-actionneur de la figure 12 utilisant un capteur apte à laisser passer l'axe du rotor de l'actionneur vers le haut.

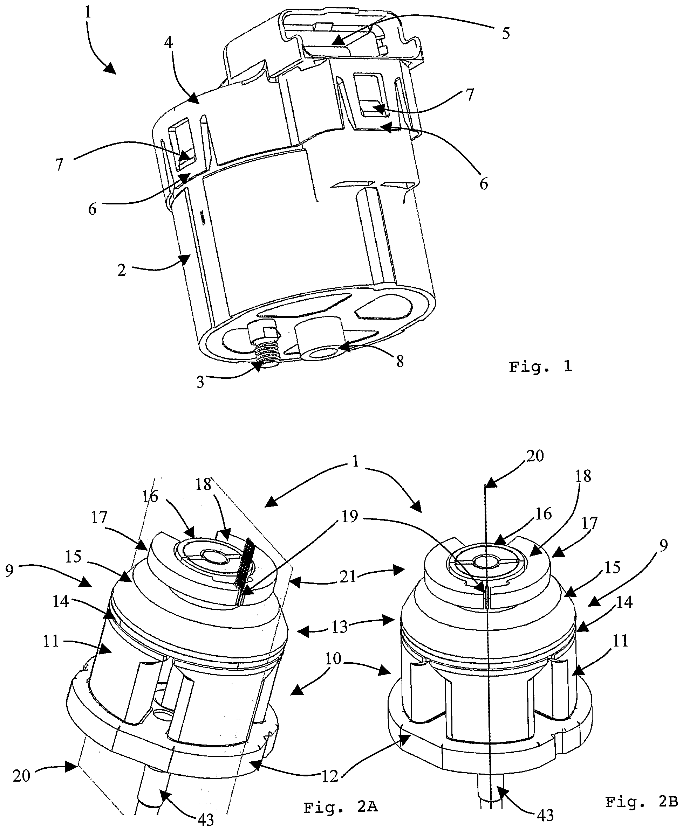

La figure 1 présente le servo-actionneur (1) tel qu'il se présente dans un mode de réalisation préférentiel. Il se compose d'un ensemble statorique surmoulé (2) sur lequel peut être disposé un ou plusieurs goujons (3) pour venir fixer le servo-actionneur (1) sur un bâti externe, ainsi que d'un couvercle (4) intégrant un ensemble de connexions électriques (5) servant au pilotage de l'actionneur et du capteur électromagnétique et à la sortie du signal électrique du capteur, par exemple comportant une sonde à effet Hall. Le couvercle (4) est relié solidaire à l'ensemble statorique surmoulé (2) par le clipsage de pattes ajourées (6) prolongeant le couvercle (4) avec des griffes protubérantes (7) dudit ensemble statorique surmoulé (2) . La face opposée au couvercle (4) présente un palier (8) formé dans l'ensemble statorique surmoulé (2) par lequel l'axe de l'actionneur (non visible) s'étend pour pouvoir fixer un organe extérieur à déplacer en rotation.

Sur les figures 2A et 2B, on retrouve le serve-actionneur (1), composé d'un actionneur (9) et d'un capteur (21), sans les éléments de surmoulage ni le couvercle (4) et suivant un premier mode de réalisation. L'actionneur (9) le composant est constitué par un premier ensemble statorique (10) comportant ici 4 pôles statoriques (11) s'étendant dans la direction axiale de l'actionneur fixés sur une base (12) et un rotor (13) comportant un disque aimanté axialement (14) alternativement à quatre paires de pôles magnétiques et une culasse (15) en matériau ferromagnétique. Cette culasse (15) est prolongée axialement pour supporter un second aimant (16), de forme annulaire, comportant deux paires de pôles aimantés dans le sens radial alternativement. Ce second aimant (16) est donc solidaire de la culasse (15) et tourne à l'intérieur d'un second ensemble statorique (17) fixe par rapport au stator. Il est formé par deux arcs ferromagnétiques (18), entourant partiellement le second aimant (16) annulaire, entre lesquels est placée une sonde magnétosensible (19) à effet Hall. Préférentiellement, la sonde magnétosensible (19) est placée de telle façon à ce que son élément sensible de détection soit situé dans le plan médian (20) d'au moins un des pôles statoriques (11), zone libre de toute induction magnétique. Les arcs ferromagnétiques (18) sont moins épais au niveau de la sonde magnétosensible (19), ce gui permet de concentrer le flux magnétique issu du second aimant (16). Le flux collecté au niveau de la sonde magnétosensible (19) est ainsi fonction linéaire de la positien de la culasse (15) et donc de l'organe extérieur piloté par ladite culasse (15) par l'intermédiaire d'un axe (43) traversant.

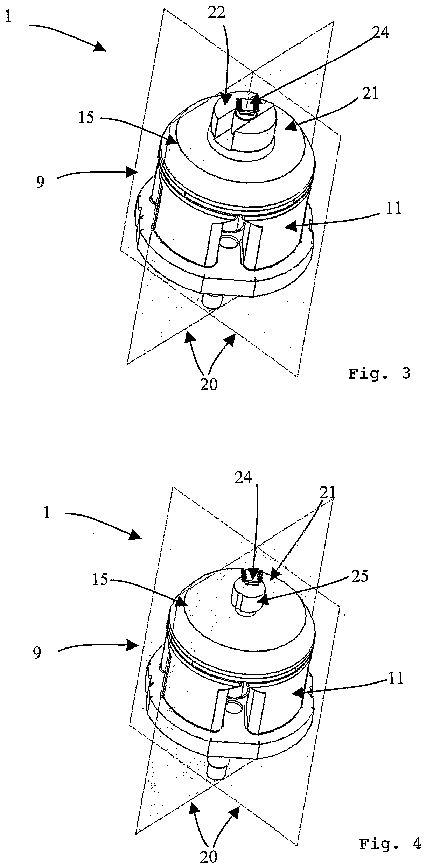

La figure 3 présente le serve-actionneur (1) suivant un deuxième mode de réalisation du capteur (21) et sans surmoulage ni couvercle (4). La culasse (15) de l'actionneur présente une forme ferromagnétique en U (22) ayant un champ coercitif inférieur à 500 Oersteds qui présente une aimantation axiale résiduelle. Dans l'axe de cette forme ferromagnétique en U (22), correspondant à l'intersection des plans médians (20) de symétrie des pôles statoriques (11), est placée une sonde à effet Hall (24), par exemple de type Melexis 90316, qui présente au moins 2 éléments sensibles de Hall. Ces éléments sensibles captent l'induction générée par la forme ferromagnétique en U (22) suivant deux directions orthogonales. De manière préférentielle mais non limitative, ces deux directions orthogonales sont définies par les plans médians (20) de symétrie des pôles statoriques (11). Le signal de sortie obtenu est une fonction linéaire de l'angle de rotation de la forme ferromagnétique en U (22) et le signal n'est pas perturbé par le fonctionnement de l'actionneur (9) puisque les éléments sensibles de la sonde à effet Hall (24) sont placés à proximité de l'axe de cet actionneur (9), zone libre de toute induction magnétique.

La figure 4 présente le serve-actionneur (1) suivant un troisième mode de réalisation du capteur (21) et sans surmoulage ni couvercle (4). La culasse (15) de l'actionneur présente un aimant ferrite cylindrique (25) aimanté diamétralement. Dans l'axe de cet aimant ferrite cylindrique (25), correspondant à l'intersection des plans médians de symétrie des pôles statoriques (11), est placée une sonde à effet Hall (24), par exemple de type Melexis 90316, qui présente au moins 2 éléments sensibles de Hall. Ces éléments sensibles captent l'induction générée par l'aimant ferrite cylindrique (25) suivant deux directions orthogonales. De manière préférentielle mais non limitative, ces deux directions orthogonales sont définies par les plans médians (20) de symétrie des pôles statoriques (11). Le signal de sortie obtenu est une fonction linéaire de l'angle de rotation de l'aimant ferrite cylindrique (25) et le signal n'est pas perturbé par le fonctionnement de l'actionneur (9) puisque les éléments sensibles de la sonde à effet Hall (24) sont placés à proximité de l'axe de cet actionneur (9), zone libre de toute induction magnétique.

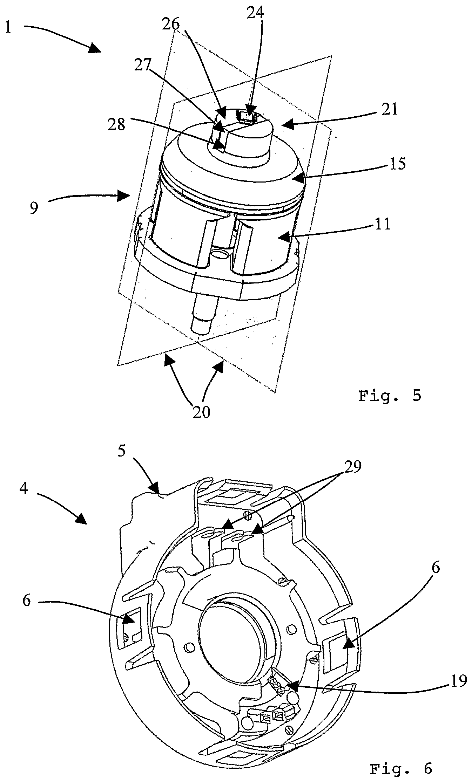

La figure 5 présente le serve-actionneur (1) suivant un quatrième mode de réalisation du capteur (21) et sans surmoulage ni couvercle (4). La culasse (15) de l'actionneur présente une forme en u (26) réalisé dans un matériau quelconque qui assure le tenu d'un aimant (27) dans la fente (28) de la forme en U (26) . Dans l'axe de la forme de U (26), correspondant à l'intersection des plans médians de symétrie des pôles statoriques (11), est placée une sonde à effet Hall (24), par exemple de type Melexis 90316, qui présente au moins 2 éléments sensibles de Hall suivant deux directions orthogonales. De manière préférentielle mais non limitative, ces deux directions orthogonales sont définies par les plans médians (20) de symétrie des pôles statoriques (11) . Ces éléments sensibles captent l'induction générée par l'aimant (27) . Le signal de sortie obtenu est une fonction linéaire de l'angle de rotation de l'aimant (27) et le signal n'est pas perturbé par le fonctionnement de l'actionneur (9) puisque les éléments sensibles de la sonde à effet Hall (24) sont placés à proximité de l'axe de cet actionneur (9), zone libre de toute induction magnétique.

La figure 6 présente le couvercle (4) de fermeture du serve-actionneur (1) suivant le premier mode de réalisation du capteur (21). Il contient l'ensemble statorique du capteur (21) ainsi que la sonde magnétosensible (19) servant à mesurer le flux magnétique produit par le capteur (21) décrit en figures 2A et 2B. Dans ce mode de réalisation, cette sonde magnétosensible (19) est une sonde à effet Hall qui reçoit, proportionnellement à la position du rotor (13)***1*** le flux magnétique produit par le second aimant (16) capteur fixé sur la culasse du rotor (13) de l'actionneur (9). Le positionnement de l'ensemble statorique du capteur (21) et de la sonde magnétosensible (19) par rapport aux pôles statoriques (11) est assuré par le surmoulage du serve-actionneur (1) . En association avec le second aimant (16) capteur, lui-même positionné surla culasse (15) relativement au disque aimanté axialement (14) de l'actionneur (9), l'ensemble ainsi formé permet d'obtenir, de façon répétitive en production, un serve-actionneur (1) compact avec connaissance de la position absolue du rotor (13). Le couvercle (4) obtenu présente des pattes ajourées (6) qui sont destinées à assurer la liaison et le maintien du couvercle (4) avec l'ensemble statorique surmoulé (2). Il présente aussi deux éléments de connexion électrique (29) destinés à assurer la connexion électrique de l'ensemble statorique surmoulé (2). Ces éléments de connexion électrique (29) sont sous la forme de lames fendues, forme qui assure une connexion élastique insensible aux tolérances de positionnement entre l'ensemble statorique (2) et le couvercle (4) lors de leur assemblage. La connexion électrique de l'actionneur (9) et du capteur (21) est réalisée au niveau de l'ensemble de connexion électrique (5) du couvercle (4). À l'aide d'un connecteur extérieur (non montré), il est ainsi possible de connecter le serve-actionneur (1) de la présente invention.

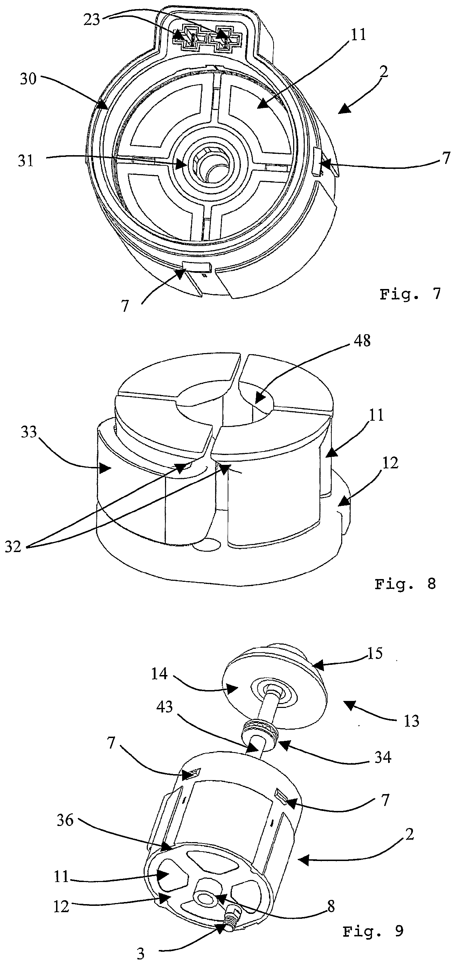

La figure 7 présente l'ensemble statorique surmoulé (2). Dans un mode de réalisation avantageux, le surmoulage de l'ensemble statorique (10) est réalisé en un matériau thermoplastique tel gue le LCP (Liguid Crystal Polymer). Ce surmoulage, englobant les pôles statoriques (11) et les bobines d'alimentation électrique (33), permet d'une part une meilleure évacuation de la chaleur produite par effet Joule au niveau des bobines (33) lors de l'alimentation de celles-ci, et d'autre part permet de réaliser, sans étape supplémentaire, un support de butée (31) en LCP, venant s'appuyer sur les épaulements (48) des pôles statoriques (11), ainsi qu'un palier, non visible sur la figure, sur la face opposée au couvercle (4) de l'actionneur (9). Le surmoulage permet, de plus, d'assurer la connexion mécanique de l'ensemble statorigue surmoulé (2) avec le couvercle (4) grâce à la présence de griffes protubérantes (7) sur lesquelles viennent se clipser les pattes ajourées (6) du couvercle (4) et grâce à la présence d'une gorge (30) dans le surmoulage gui est destinée à recevoir une pâte adhésive gui assurera le contact de l'ensemble statorique surmoulé (2) avec le couvercle (4) . La connexion électrique est réalisée au niveau de la zone de connexion électrique (23) en forme de croix gui permet la connexion élastique des deux éléments de connexion électrique (29) du couvercle (4) sous forme de lames fendues. Enfin, ce surmoulage a une fonction antivibratoire gui protège le servo-actionneur (1) des vibrations extérieures lors du fonctionnement de l'ensemble dans l'application.

La figure 8 présente une vue isolée des pôles statoriques (11) de l'actionneur chassés mécaniquement dans une base (12) en matériau ferromagnétique. Les quatre pôles statorigues (11) présentent chacun un épanouissement (32) au niveau de leur tête, ce qui permet d'augmenter la course angulaire utile et atteindre une valeur voisine de 80°. L'association des quatre pôles statorigues (11) et des épanouissements (32) polaires avec les pôles aimantés du rotor permet d'obtenir un ratio de couple sur un nombre de pôles optimal. Dans un mode de réalisation avantageux, les pôles statorigues (11) sont obtenus par un procédé dit de « frappe à froid » permettant de les réaliser en une seule opération. Pour assurer une bonne conduction du flux magnétique, les pôles statoriques (11) sont chassés mécaniquement dans une base (12) en matériau ferromagnétique. La planéité des pôles statoriques (11) au niveau de leur tête est assurée par l'arrière de la base (12) où la base des pôles statoriques (11) n'est pas plan. Par l'action mécanique de chassage, le joint magnétique obtenu est optimal et permet de ne pas créer de couple résiduel magnétostatique et d'assurer la bonne conduction du flux d'induction magnétique entre les pôles statoriques (11) sans déformer le couple sans courant de l'actionneur (9) .Avantageusement, ces pôles statoriques (11) présentent des épaulements (48) qui servent d'assise à un support de butée (31) du rotor (13) de l'actionneur (9) . Les bobines d'alimentation électrique (33) servant à générer le flux magnétique utilisé par l'actionneur (9) sont placées sur chacun des pôles statoriques (11) . Sur la figure 8, une seule de ces bobines (33) est représentée.

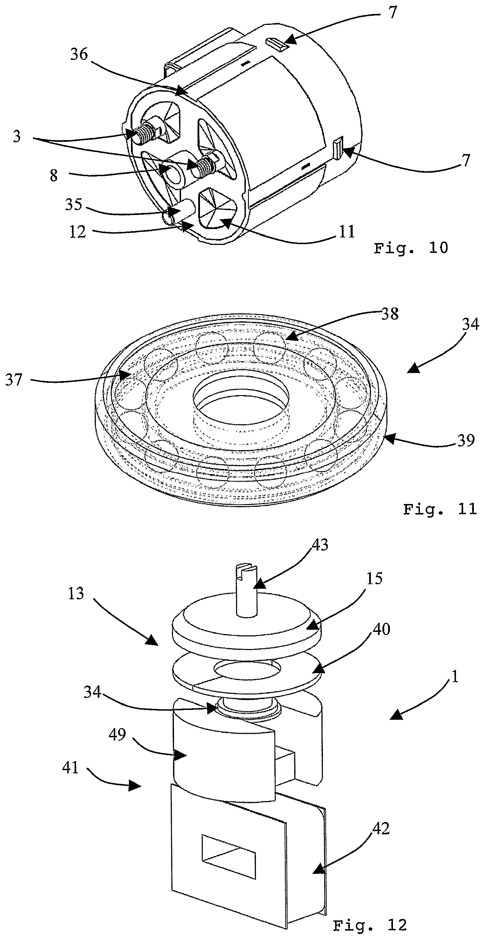

La figure 9 présente une vue éclatée de l'ensemble statorique surmoulé (2), une butée axiale (34) et le rotor (13) de l'actionneur (9) électromagnétique proposé par la présente invention. Le butée axiale (34) vient s'appuyer sur le support de butée (31) réalisé par l'ensemble statorique surmoulé (2) . Le rotor (13) de l'actionneur, composé d'une culasse (15) en matériau ferromagnétique et d'un disque aimanté axialement (14) présentant quatre paires de pôles aimantés alternativement, vient ensuite au contact de la butée axiale (34), guidé grâce à son axe (43) solidaire par le palier (8) réalisé dans l'ensemble statorique surmoulé (2) sur la face opposée au couvercle (4). Par ce mode de réalisation avantageux, l'attraction magnétique du rotor (13) sur les pôles statoriques (11) associée aux guidages axial et radial formés par, respectivement, la butée axiale (34) et le palier (8) réalisé dans l'ensemble statorique surmoulé (2), assure l'auto-centrage et le parallélisme du rotor (13) par rapport à la surface des pôles statoriques (11) . Sur l'arrière de l'ensemble statorique surmoulé (2), il peut être placé un ou plusieurs goujons (3) filetés aptes à assurer la fixation du servo-actionneur (1) sur un élément extérieur, par exemple une vanne de conduit d'admission d'air automobile. La forme et le nombre de goujons (3) ne sont pas limités et il peut par exemple être placés deux goujons (3) comme indiqué sur la figure 10. Ces goujons (3) peuvent être associés avec un élément de guidage (35) pour positionnement avant fixation du servo-actionneur (1). Ces éléments de guidage (35) et de fixation sont généralement vissés dans la base ·(12) ou la base des pôles statoriques (11) car l'arrière de l'actionneur (9) est libre de tout surmoulage, ceci afin de permettre une meilleure évacuation de la chaleur émise par puissance Joule par l'actionneur (9) pendant le fonctionnement dans l'application. Le positionnement de l'actionneur est, de plus, facilité par la présence de méplats (36) au niveau de la base (12).

La figure 11 présente une butée axiale (34) à billes pouvant être utilisée, de façon non limitative, dans la présente invention. Préférentiellement, cette butée axiale (34) est constituée de 3 ensembles simples : un ensemble de deux flasques (37) contenant un ensemble de billes (38) glissant entre les deux flasques (37) qui sont eux-mêmes tenus par une cage de roulement (39) généralement en matière plastique assurant la cohésion de la butée axiale (34). Les deux flasques (37) peuvent ainsi glisser l'un par rapport à l'autre indépendamment. Cette butée axiale (34) est posée sur l'ensemble statorique surmoulé (2) et elle supporte le rotor (13), assure son auto-centrage et permet sa rotation lorsque celui-ci est placé sur l'ensemble statorique surmoulé (2), ceci en limitant le frottement à son minimum.

La figure 12 présente un serve-actionneur (2) suivant les enseignements de la présente invention et suivant un deuxième mode de réalisation de l'actionneur (9) et pour lequel il peut être appliqué les détails de réalisation de l'actionneur (9) divulgués dans la présente demande. Cet actionneur (9) présente ainsi un rotor (13) formé d'une culasse (15) sur lequel est fixé solidaire un aimant (40) présentant deux paires de pôles. Ce rotor est posé sur une butée à billes (34) elle-même posée sur une partie statorique (41) composée de deux pôles ferromagnétiques (49) et d'une bobine d'alimentation électrique (42) • Dans cet exemple, non limitatif sur le type de capteur utilisé, l'axe (43) est réalisé avec une forme en U sur sa partie supérieure et réalisé en un matériau ayant un champ coercitif inférieur à 500 Oersteds et présentant une aimantation axiale résiduelle, comme précisé en figure 3 dans le deuxième mode de réalisation du capteur (21) .

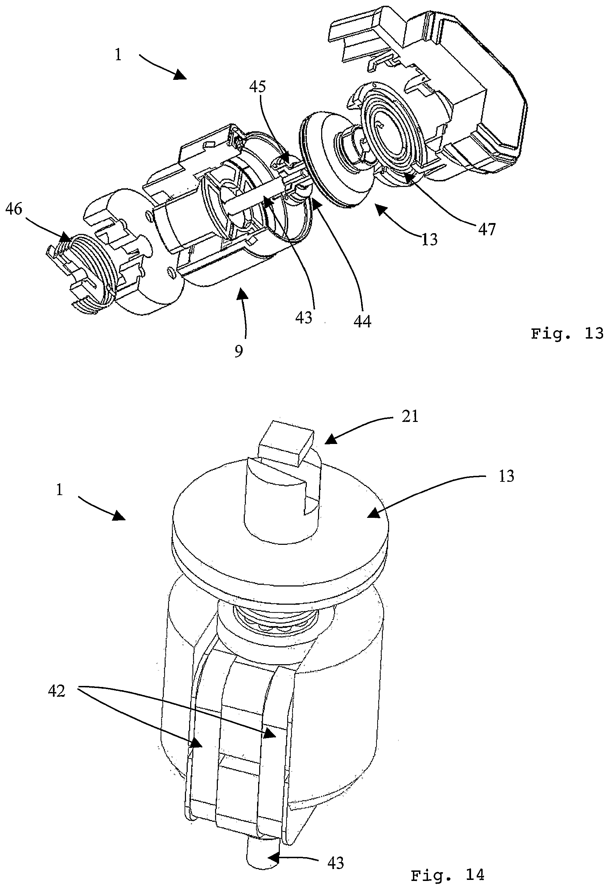

Sur la figure 13, le serve-actionneur (1) décrit dans la présente demande est associé à un système de verrouillage et de déverrouillage (44), ici mécanique, dont la fonction est de bloquer les actions mécaniques extérieures s'exerçant sur l'arbre de sortie. Il présente, à cet effet, un verrou mécanique (45) situé sous le rotor (13) de l'actionneur (9) et constitué de deux parties distinctes évoluant l'une par rapport à l'autre et gui ont pour fonction de permettre le blocage de toute action extérieure sans empêcher le mouvement commandé de l'actionneur (9). L'ajout de ce système de verrouillage/déverrouillage (44) permet de sous-dimensionner la taille de l'actionneur pour un encombrement donné puisqu'il n'est plus sensible aux fluctuations de la charge extérieure s'exerçant sur l'organe piloté par l'axe (43) relié fixe au rotor (13). Ce système est ici réalisé par un ensemble mécanique, mais cette réalisation n'est pas limitative et peut être fait avec un ensemble d'une autre nature (électromagnétique, hydraulique, pneumatique,,).

La figure 14 montre une variante du servo-actionneur (1) de la figure 12 pour lequel l'axe (43) du rotor (13) est traversant vers l'arrière de l'actionneur (9) dans le but de déplacer un organe sur l'arrière de l'actionneur (9) . À cet effet, les bobines (42) de l'actionneur sont séparées physiquement en deux de manière à laisser la place suffisante pour laisser passer l'axe (43) au travers de l'actionneur (9) . Cette configuration permet de positionner un capteur (21) sur le haut du rotor (13) avec une grande liberté puisque la sortie de l'axe (43) n'est pas nécessaire sur le haut du rotor (13) . On peut donc envisager l'utilisation de tout type de capteurs (21) comme ceux décrits dans la présente demande sans être limitatifs.

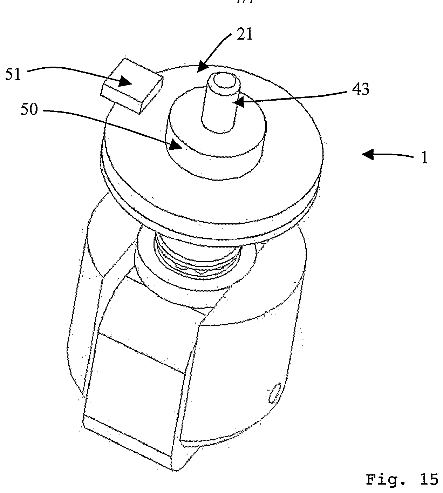

La figure 15 montre une variante du servo-actionneur (1) de la figure 12 pour lequel le capteur (21) comprend un émetteur (50) de champ cylindrique aimanté diamétralement et solidaire de l'axe (43) au voisinage duquel est positionné fixe par rapport à l'axe un récepteur de champ (51) comportant deux éléments magnétosensibles aptes à effectuer la mesure des composantes tangentielles et radiale ou tangentielle et axiale du champ magnétique émis. Le récepteur de champ (51) comprend alors un circuit de traitement apte à effectuer une combinaison des deux composantes afin de déterminer l'angle de rotation de l'axe (43). Dans cette configuration, le récepteur de champ (51) du capteur (21) étant déportée de l'axe (43), l'axe (43) peut ainsi être débouchant vers le haut de l'actionneur (9) et il peut ainsi être fixé à un organe à déplacer.

Dans des applications sensibles nécessitant un système élastique de rappel pour assurer le retour en position initiale de l'organe à commander, ce système de verrouillage/déverrouillage (44) permet, de plus, de scinder le système de rappel élastique en deux, divisant ainsi le couple mécanique à vaincre par l'actionneur pour déplacer l'organe à déplacer contre le ressort. La figure 13, présentant un tel serve-actionneur (1) à système de rappel, montre un premier organe de rappel élastique (46) sous la forme d'un ressort de torsion situé sur le dessous de l'actionneur et qui applique son couple de rappel sur l'axe (43) commandé par l'actionneur (9). Un deuxième organe de rappel élastique (47), sous la forme d'un ressort de torsion, est situé au niveau du rotor (13) de l'actionneur (9) et applique son couple de rappel directement sur le rotor (13). Ainsi, lorsque le verrou (45) est bloqué, l'actionneur n'a à vaincre que le deuxième organe de rappel élastique (47) pour positionner l'organe à commander. Lorsque le verrou est débloqué les deux couples des deux organes de rappel élastique (46) et (47) s'ajoutent pour venir repositionner l'organe à déplacer dans sa position initiale. Ceci permet ainsi de sous-dimensionner la taille du serve-actionneur (1) et de l'utiliser dans des applications auxquelles il ne pourrait pas prétendre sans ce système de verrouillage/déverrouillage (44).

## Revendications

1. Servo-actionneur (1) électromagnétique monophasé composé d'un actionneur (9) rotatif destiné à déplacer un organe mobile sur une course limitée, comportant une structure statorique (10) à 2N pôles (11), N étant égal à 1 ou 2, chaque pôle étant orienté axialement et comprenant un plan médian longitudinal de symétrie, et au moins une bobine d'excitation, ladite structure statorique étant réalisée en un matériau de haute perméabilité magnétique, et un rotor (13) présentant une culasse ferromagnétique (15) et une partie mince aimantée (14) constituée de 2N paires de pôles aimantés axialement, en sens alterné et d'un capteur (21) de position angulaire du rotor, le capteur (21) de position angulaire du rotor présente un émetteur (16, 22, 25, 27, 40) de champ magnétique et un récepteur (19) dudit champ magnétique fixe par rapport à la structure statorique, le récepteur (19) fixe étant à proximité dudit émetteur, **caractérisé en ce que** l'émetteur (16,22,25,27,40) de champ magnétique est fixé solidaire directement sur la culasse ferromagnétique (15) à proximité de l'axe de l'actionneur (9) et le récepteur (19) est situé dans au moins un des lesdits plans médians longitudinaux de symétrie (20) des pôles (11) de la structure statorique.

2. Servo-actionneur électromagnétique monophasé selon la revendication 1, **caractérisé en ce que** l'émetteur (16,22,25,27,40) de champ magnétique est un aimant annulaire (16).

3. Servo-actionneur électromagnétique monophasé selon la revendication 1, **caractérisé en ce que** le récepteur (19) de champ magnétique est une sonde magnétosensible à effet Hall (19).

4. Servo-actionneur électromagnétique monophasé selon la revendication 3, **caractérisé en ce que** ladite sonde magnétosensible (19) est placée entre deux circuits magnétique de collecte formés par deux arcs ferromagnétiques (18) entourant partiellement l'aimant annulaire (16).

5. Servo-actionneur électromagnétique monophasé selon l'une quelconque des revendications précédentes, **caractérisé en ce que** le récepteur de champ magnétique est une sonde du type mesurant deux composantes planes et placée sur l'axe formé par l'intersection des plans médians longitudinaux (20) de symétrie des pôles.

6. Servo-actionneur électromagnétique selon la revendication 1, **caractérisé en ce que** l'émetteur de champ magnétique (16,22,25,27,40) est un aimant cylindrique aimanté diamétralement (25) et **en ce que** le récepteur (19) du champ magnétique est constitué de deux éléments magnétosensibles (24) mesurant les composantes tangentielle et radiale ou tangentielle et axiale du champ magnétique émis.

7. Servo-actionneur électromagnétique selon la revendication 6, **caractérisé en ce qu'**il comprend un circuit de traitement apte à effectuer une combinaison des deux composantes afin de déterminer l'angle de rotation du rotor.

8. Servo-actionneur électromagnétique monophasé selon la revendication 5, **caractérisé en ce que** la culasse 15 de l'actionneur présente une forme ferromagnétique en U 22, l'émetteur de champ magnétique est cette pièce ferromagnétique en forme de U (22), ayant un champ coercitif inférieur à 500 Oersteds.

9. Servo-actionneur électromagnétique monophasé selon la revendication 5, **caractérisé en ce que** la culasse (15) de l'actionneur présente une forme en U (26), l'émetteur de champ magnétique est la forme de U (26), dans la fente de laquelle est installé un aimant (27).

10. Servo-actionneur électromagnétique monophasé selon la revendication 5, **caractérisé en ce que** l'émetteur de champ magnétique est un aimant à polarisation diamétrale.

11. Servo-actionneur électromagnétique monophasé selon l'une quelconque des revendications précédentes, **caractérisé en ce qu'**il intègre un dispositif de verrouillage et de déverrouillage (44) d'un arbre de sortie, commandé par le rotor de l'actionneur.

12. Servo-actionneur électromagnétique monophasé selon la revendication 1, **caractérisé en ce que** le capteur de position est un capteur digital détectant la ou les positions extrêmes de déplacement de l'organe mobile.

## Patentansprüche

1. Einphasiger elektromagnetischer Servo-Aktuator (1), der aus einem Drehaktuator (9) besteht, der dazu bestimmt ist, ein bewegliches Bauteil über einen begrenzten Hub zu verschieben, mit einer Statorstruktur (10) mit 2N Polen (11), wobei N gleich 1 oder 2 ist, wobei jeder Pol axial ausgerichtet ist und eine Längssymmetriemittelebene aufweist, und mindestens einer Erregerspule, wobei die Statorstruktur aus einem Material mit hoher magnetischer Permeabilität hergestellt ist, und einem Rotor (13) mit einem ferromagnetischen Joch (15) und einem dünnen magnetisierten Abschnitt (14), der aus 2N Paaren in Wechselrichtung axial magnetisierter Pole besteht, und einem Rotorwinkelpositionssensor (21), wobei der Rotorwinkelpositionssensor (21) einen Magnetfeldsender (16, 22, 25, 27, 40) und einen Empfänger (19) des Magnetfeldes aufweist, der relativ zur Statorstruktur feststehend ist, wobei sich der feststehende Empfänger (19) in der Nähe des Senders befindet, **dadurch gekennzeichnet, dass** der Magnetfeldsender (16, 22, 25, 27, 40) direkt an dem ferromagnetischen Joch (15) in der Nähe der Achse des Aktuators (9) befestigt ist und der Empfänger (19) in mindestens einer der genannten Längssymmetriemittelebenen (20) der Pole (11) der Statorstruktur angeordnet ist.

2. Einphasiger elektromagnetischer Servo-Aktuator nach Anspruch 1, **dadurch gekennzeichnet, dass** der Magnetfeldsender (16, 22, 25, 27, 40) ein Ringmagnet (16) ist.

3. Einphasiger elektromagnetischer Servo-Aktuator nach Anspruch 1, **dadurch gekennzeichnet, dass** der Magnetfeldempfänger (19) eine magnetempfindliche Hall-Effekt-Sonde (19) ist.

4. Einphasiger elektromagnetischer Servo-Aktuator nach Anspruch 3, **dadurch gekennzeichnet, dass** die magnetempfindliche Sonde (19) zwischen zwei Sammelmagnetkreisen angeordnet ist, die von zwei ferromagnetischen Bögen (18) gebildet werden, die den Ringmagneten (16) teilweise umgeben.

5. Einphasiger elektromagnetischer Servo-Aktuator nach einem der vorhergehenden Ansprüche, **dadurch gekennzeichnet, dass** der Magnetfeldempfänger eine Sonde des Typs ist, der zwei ebene Komponenten misst und auf der Achse angeordnet ist, die durch den Schnittpunkt der Längssymmetriemittelebenen (20) der Pole gebildet wird.

6. Elektromagnetischer Servo-Aktuator nach Anspruch 1, **dadurch gekennzeichnet, dass** der Magnetfeldsender (16, 22, 25, 27, 40) ein diametral magnetisierter zylindrischer Magnet (25) ist und dass der Magnetfeldempfänger (19) aus zwei magnetempfindlichen Elementen (24) besteht, die die tangentialen und radialen oder tangentialen und axialen Komponenten des emittierten Magnetfeldes messen.

7. Elektromagnetischer Servo-Aktuator nach Anspruch 6, **dadurch gekennzeichnet, dass** er eine Verarbeitungsschaltung umfasst, die in der Lage ist, eine Kombination der beiden Komponenten durchzuführen, um den Drehwinkel des Rotors zu bestimmen.

8. Einphasiger elektromagnetischer Servo-Aktuator nach Anspruch 5, **dadurch gekennzeichnet, dass** das Joch 15 des Aktuators eine ferromagnetische U-Form (22) aufweist, wobei der Magnetfeldsender dieser U-förmige ferromagnetische Teil (22) ist, der ein Koerzitivfeldstärke von weniger als 500 Oersteds aufweist.

9. Einphasiger elektromagnetischer Servo-Aktuator nach Anspruch 5, **dadurch gekennzeichnet, dass** das Joch (15) des Aktuators eine U-Form (26) aufweist, wobei der Magnetfeldsender die U-Form (26) ist, in deren Schlitz ein Magnet (27) angeordnet ist.

10. Einphasiger elektromagnetischer Servo-Aktuator nach Anspruch 5, **dadurch gekennzeichnet, dass** der Magnetfeldsender ein diametral polarisierter Magnet ist.

11. Einphasiger elektromagnetischer Servo-Aktuator nach einem der vorhergehenden Ansprüche, **dadurch gekennzeichnet, dass** er eine Vorrichtung (44) zum Verriegeln und Entriegeln einer Abtriebswelle umfasst, die durch den Rotor des Aktuators gesteuert wird.

12. Einphasiger elektromagnetischer Servo-Aktuator nach Anspruch 1, **dadurch gekennzeichnet, dass** der Positionssensor ein digitaler Sensor ist, der die Extremposition(en) der Verschiebung des beweglichen Bauteils erkennt.

## Claims

1. Single-phase electromagnetic servo-actuator (1) consisting of a rotary actuator (9) intended for moving a movable member along a limited path, comprising a stator structure (10) having 2N poles (11), N being equal to 1 or 2, each pole being oriented axially and including a longitudinal median plane of symmetry, and at least one excitation coil, said stator structure being made of a material of high magnetic permeability, and a rotor (13) having a ferromagnetic yoke (15) and a thin magnetized part (14) consisting of 2N pairs of poles which are axially magnetized in alternate directions and a sensor (21) for detecting the angular position of the rotor, the sensor (21) for detecting the angular position of the rotor having a magnetic field transmitter (16, 22, 25, 27, 40) and a receiver (19) for receiving said magnetic field which is fixed with respect to the stator structure, the fixed receiver (19) being close to said transmitter, **characterized in that** the magnetic field transmitter (16, 22, 25, 27, 40) is rigidly connected directly to the ferromagnetic yoke (15) close to the axis of the actuator (9), and the receiver (19) is located in at least one of said longitudinal median planes of symmetry (20) of the poles (11) of the stator structure.

2. Single-phase electromagnetic servo-actuator according to claim 1, **characterized in that** the magnetic field transmitter (16, 22, 25, 27, 40) is an annular magnet (16).

3. Single-phase electromagnetic servo-actuator according to claim 1, **characterized in that** the magnetic field receiver (19) is a magneto-sensitive Hall effect probe (19).

4. Single-phase electromagnetic servo-actuator according to claim 3, **characterized in that** said magneto-sensitive probe (19) is placed between two magnetic collection circuits formed by two ferromagnetic arcs (18) partially surrounding the annular magnet (16).

5. Single-phase electromagnetic servo-actuator according to any of the preceding claims, **characterized in that** the magnetic field receiver is a probe of the type which measures two plane components and is placed on the axis formed by the intersection of the longitudinal median planes of symmetry (20) of the poles.

6. Electromagnetic servo-actuator according to claim 1, **characterized in that** the magnetic field transmitter (16, 22, 25, 27, 40) is a diametrically magnetized cylindrical magnet (25), and **in that** the magnetic field receiver (19) consists of two magneto-sensitive elements (24) which measure the tangential and radial or tangential and axial components of the transmitted magnetic field.

7. Electromagnetic servo-actuator according to claim 6, **characterized in that** it includes a processing circuit capable of combining the two components in order to determine the angle of rotation of the rotor.

8. Single-phase electromagnetic servo-actuator according to claim 5, **characterized in that** the yoke 15 of the actuator has a U-shaped ferromagnetic portion 22, the magnetic field transmitter being said U-shaped ferromagnetic portion (22), which has a coercive field of less than 500 Oersteds.

9. Single-phase electromagnetic servo-actuator according to claim 5, **characterized in that** the yoke (15) of the actuator has a U-shaped portion (26), the magnetic field transmitter being the U-shaped portion (26), in the slot of which a magnet (27) is installed.

10. Single-phase electromagnetic servo-actuator according to claim 5, **characterized in that** the magnetic field transmitter is a diametrically polarized magnet.

11. Single-phase electromagnetic servo-actuator according to any of the preceding claims, **characterized in that** it incorporates a device (44) for locking and unlocking an output shaft, which is controlled by the rotor of the actuator.

12. Single-phase electromagnetic servo-actuator according to claim 1, **characterized in that** the position sensor is a digital sensor which detects the extreme position(s) of movement of the movable member.
